# EUROPEAN PATENT APPLICATION

(11) **EP 1 375 773 A2**
(43) Date of publication of application: **02.01.2004**
(21) Application number: 03447143.3
(22) Date of filing: 05.06.2003
(51) Int. Cl.: E04C 5/01

(54) **Metal fibres for use in fibre-reinforced concrete**

(30) Priority: 05.06.2002 EP 02077276
(71) Applicant: Euro Business Corporation bvba, 2340 Beerse (BE)
(72) Inventor: van Laer, Marcel, 2300 Turnhout (BE); van Laer, Michael, 9000 Gent (BE)
(74) Representative: Luys, Marie-José

(57) **Abstract**

The present invention relates to a metal fibre (1), at least one side face (2, 3) of the metal fibre (1) being provided with recesses (12, 22; 13, 23). It is preferred that the recesses (12, 22; 13, 23) are positioned at a regular distance from each other, and that the at least one recess (12, 22; 13, 23) is recessed with respect to the side face (2, 3) of the metal fibre (1) over a distance which is less than 50%, preferably less than 30% of the width of the metal fibre (1). The metal fibre (1) may further be provided with a plurality of undulations (6) extending in length direction of the metal fibre (1). The invention also relates to a method for producing such a metal fibre.

## Description

The present invention relates to metal fibres for use in fibre-reinforced concrete.

The use of steel fibres in fibre-reinforced concrete is well known to the man skilled in the art. According to ASTM standard specification A820, four types of steel fibres are distinguished depending on the source of the steel fibre material. These four types are TYPE 1 (cold drawn wire), TYPE 2 (cut sheet), TYPE 3 (melt-extracted) and TYPE 4 (other fibres).

The dimensions of steel fibres are mostly specified by the diameter and length of the fibres that correspond to a certain ratio (l/d). The dimensions of steel fibres are usually as follows: diameter of 0.10 to 2.50 mm, a length of 3.00 to 200.00 mm and a width of 0.10 to 4.00 mm. The average tensile strength of the steel fibres is specified to be not less than 345 MPa (50ksi) allowing the steel fibre of being cold bent around a 3.2 mm (1/8 inch).

Steel fibres having such a tensile strength may be either straight or deformed to improve adhesion to the concrete phase. Deformation of the steel fibres mostly involves the presence of undulations, the undulations being provided in length direction of the steel fibre. The amplitude of these undulations is usually from 1.00 to 3.50 mm depending on fibre thickness.

Such undulated steel fibres in a concrete mixture have a positive effect on the impact resistance, toughness and ductility of the concrete.

Although the undulated steel fibres show an increased bond strength with the concrete matrix, the tensile strength of these fibres is still limited. There is thus a need to metal fibres, in particular steel fibres which have an improved tensile strength.

It is therefore the object of the present invention is to provide metal fibres having an increased tensile strength.

This is achieved according to the present invention, with the technical features of the characterising part of the first claim.

In the metal fibre of the present invention at least one of its side faces is provided with a plurality of consecutive recesses, which are recessed with respect to the at least one side face of the fibre.

Each recess corresponds to a position where the material of the fibre has been locally compressed.

It was surprisingly found by the inventor that although each recess corresponds to a local deformation of the metal fibre, the presence of a plurality of such recesses in at least one side face of the metal fibre, allows obtaining a metal fibre with an increased tensile strength. Indeed, the metal fibres of the present invention have a tensile strength which is at least 1000 N. As a result of the increased tensile strength, the metal fibres of the present invention show an improved performance in ready concrete mixtures.

In a first preferred embodiment of this invention, taken in longitudinal direction of the metal fibre, the recesses are provided at regular distances from each other so as to achieve an increase of the tensile strength which is uniform over the whole length of the metal fibre. If it is however envisaged to vary the tensile strength in longitudinal direction of the metal fibre, the distance between consecutive recesses may be different on different positions of the metal fibre.

In a second preferred embodiment of this invention, a plurality of recesses is provided on opposite side faces of the metal fibre. This is done to achieve a uniform improvement of the tensile strength taken in cross direction of the fibre.

With the aim of improving the adhesion to a binder material comprising the metal fibres of this invention, the fibre is preferably also undulated in longitudinal direction. The combined presence of recesses and undulations in the metal fibre results in a metal fibre with an optimised tensile strength.

The present invention further relates to a method for producing the above described metal fibres. The method comprises the step of passing a metal wire throughout a device for providing a plurality of consecutive recesses in at least one side face of the metal wire in longitudinal direction thereof by locally compressing the metal wire at the position where the recess is to be formed.

The simultaneous passing and local compression has the effect that in one single process step both the desired fibre thickness is established and the tensile strength increased.

When required, the step of providing the recesses is followed by the sizing of the metal wire to metal fibres of a predetermined length.

According to a preferred embodiment of this method, the metal wire is locally compressed on opposite sides thereof, so as to achieve an optimum increase of the tensile strength, which is uniform taken in width direction of the fibre. It is important that the recesses are formed by locally compressing the material and not by removing material as this would adversely affect the resistance to breaking of the fibres.

The local compression of the metal wire so as to create the recesses may be achieved by any suitable method known to the man skilled in the art. Suitable methods include impinging one or both opposite side faces of the metal wire or passing opposite side faces of the metal wire between a pair of opposite gear wheels, the teeth of which point towards each other. In that way a dented metal fibre may be obtained.

Preferably, the step of providing the recesses is followed by an undulation step. This may be done by any suitable method known to the man skilled in the art. A suitable method includes passing opposite side faces of the metal wire adjacent the side face(s) comprising the recesses between a pair of gear wheels which are positioned in a staggered way and which rotate in opposite directions with respect to each other. One of the gear wheels is provided to form the bottoms of the undulations, whereas the other gear wheel is provided to form the tops of the undulations.

The invention is further elucidated in the following figures, description of the figures and in the example.

Figure 1 is a side view to the metal fibre of this invention.

Figure 2 is a cross section along line A-A of the metal fibre shown in figure 1.

Figure 3 shows a top view to a metal fibre of the present invention.

Figure 4 show a perspective view of the metal fibre of figure 3

Figure 5 shows another metal fibre of the present invention.

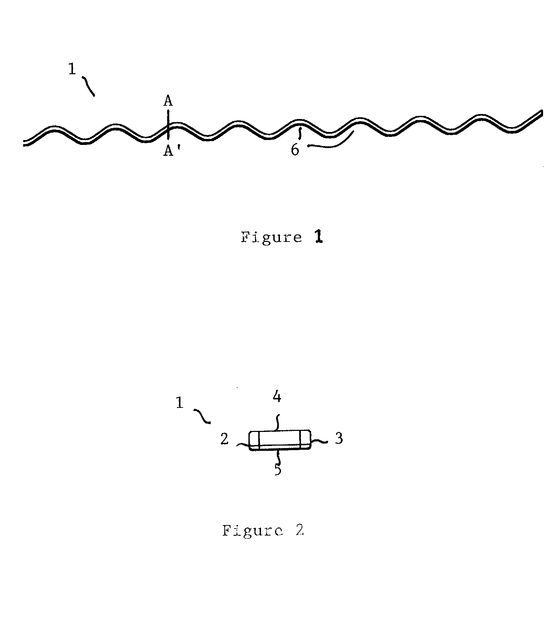

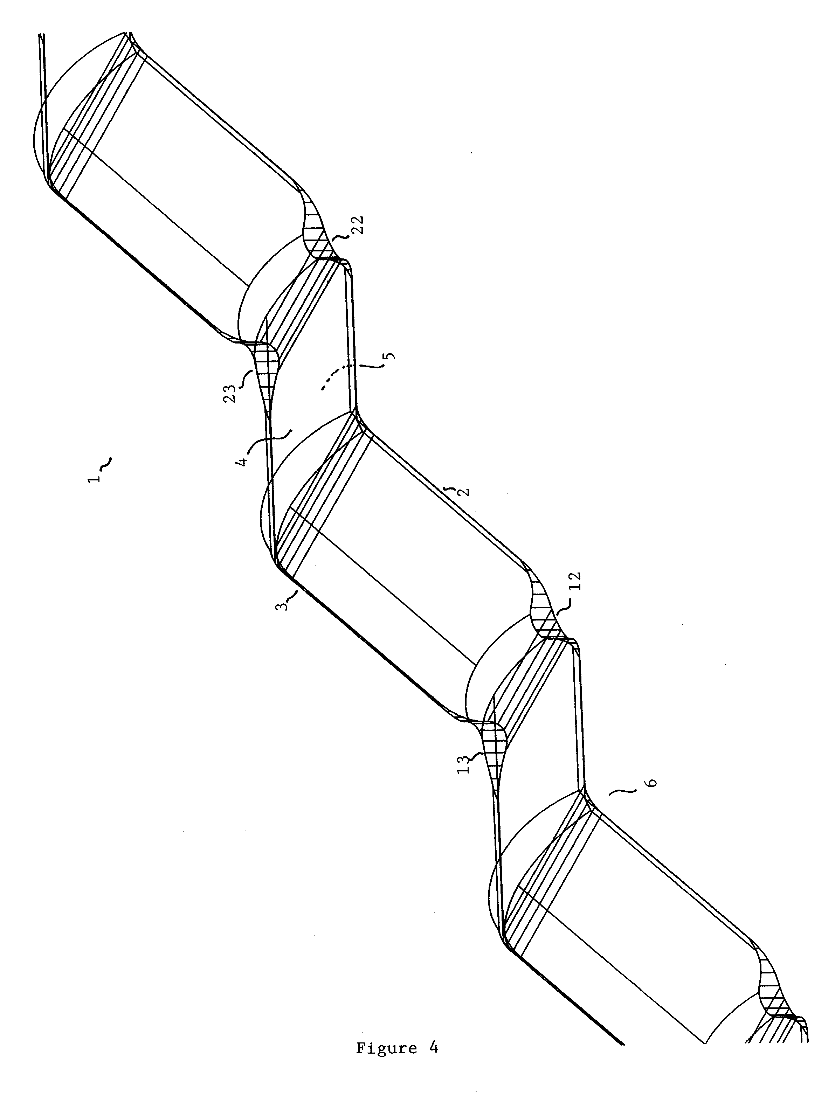

The metal fibre 1 shown in figure 1 is undulated in length direction of the metal fibre 1. The length of the metal fibre 1 is usually from 3.00 to 200 mm, and the width is generally from 0.10 to 4.00 mm. The wave height of these undulations 6 is usually between 1.00 to 3.00 mm. The shape of the tops and bottoms of the undulations of the metal fibre is not critical to the invention and may vary from substantially rounded, as shown in figure 1, to angled, as shown in figure 4. As can be seen from figure 4, the undulations 6 are provided along a side face 4, 5 of the fibre 1 adjacent the opposite side faces 2, 3 comprising the consecutive recesses 12, 22; 22, 23 (see below). Alternatively, the metal fibre 1 may however also be straight. Such a straight metal fibre 1 may be provided at its opposite ends with anchorage means (not shown). These anchorage means may for instance take the shape of a hook provided at both opposite ends of the metal fibre 1. The presence of these anchorage means results in a metal fibre showing an increased bond with the concrete matrix.

In figure 2, a cross section of the metal fibre 1 at line A-A is shown. As can be seen, the metal fibre 1 has a substantially semi-circular cross section. The metal fibre 1 may however also have any other suitable shape, for instance a circular cross section or a combination of different shapes may also be used.

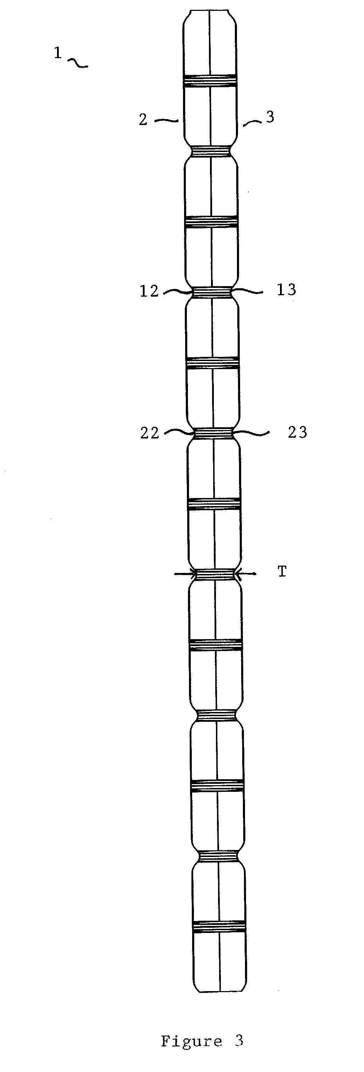

As can be seen from figure 3, at least one of the side faces 2, 3 of the fibre 1 is provided with a plurality of consecutive recesses 12, 22; 13, 23. The recesses 12, 22; 13, 23 are recessed with respect to the at least one side face 2, 3. The shape of the recess 12, 22; 13, 23 is not critical to the invention and may vary from semi oval to semi circular or any other suitable shape known to the man skilled in the art. The recesses 12, 22; 13, 23 may for example take the shape of a plurality of consecutive dents. In general, production will be more economic if the same type of recesses is used over the whole fibre 1. The recesses 12, 22; 13, 23 may be provided in only one of the side faces 2, 3 of the fibre or in two opposite side faces 2, 3, in the top face 4 and/or bottom 5 face of the metal fibre 1. The distance between consecutive recesses 12, 22; 13, 23 is not critical to the invention and may be the same on both opposite side faces 2, 3 or different, depending on the envisaged properties of the fibre 1. In longitudinal direction of the fibre 1, the distance between consecutive recesses 12, 22; 13, 23 recesses may be the same or different.

In case recesses 12, 22; 13, 23 are provided on opposite side faces 2, 3 of the metal fibre 1, the positioning of the recesses 12, 22; 13, 23 will be adapted to the envisaged properties of the fibre 1. In practise this means that recesses 12, 22; 13, 23 on opposite side faces 2, 3 may for example face each other and be provided at corresponding positions in longitudinal direction of the fibre 1, or be positioned in a staggered position or any other position suitable for the intended application. In the metal fibre 1 shown in figure 3, corresponding recesses 12, 13; 22, 23 in opposite side faces 2, 3 of the metal fibre 1 are provided on a line which extends perpendicular to the longitudinal direction of the metal fibre 1.

To achieve an optimum increased tensile strength, the material thickness T between recesses 12, 13; 22, 23 on opposite side faces 2, 3 should be sufficiently large. To achieve this, it is preferred to limit the depth of the recesses 12, 13; 22, 23 to maximally 50%, preferably maximally 30% or even 25 % of the width of the metal fibre 1. In this way, the tensile strength of the metal fibre 1 is increased without the risk to breakage of the metal fibre 1, which would otherwise lead to a decreased performance of the metal fibre 1 in a concrete mixture. In the metal fibre 1 shown in figure 3, corresponding recesses 12, 13; 22, 23 in the opposite side faces 2, 3 have a depth of approximately 20% of the width of the metal fibre 1. As a result the width of the metal fibre 1 at the position of opposed recesses 12, 13; 22, 23 is approximately 60% of the width of the metal fibre 1 at a recess free position.

In the metal fibre 1 shown in figure 3, all recesses 12, 22; 13, 23 have the same depth. It is however also possible that consecutive recesses 12, 22; 13, 23 or opposite recesses 12, 13; 22, 23 have a different depth.

In the method of the present invention, preferably metal wires with a semi-circular cross-section are used for producing the metal fibres 1. Such semi-circular metal wires are residual wires obtained in the production of metal wool starting from metal wool wire. Wires having a circular cross section (generally called cold drawn wires) may however also be used, as well as wires having a substantially elongated shape or with a groove in the top face. These semi- and circular wires are available in different qualities such as metal wires made of low carbon metal, galvanised (zinc coated) wires, copper coated fibres/wire, stainless fibres/wires and all other ferrous and non-ferrous materials.

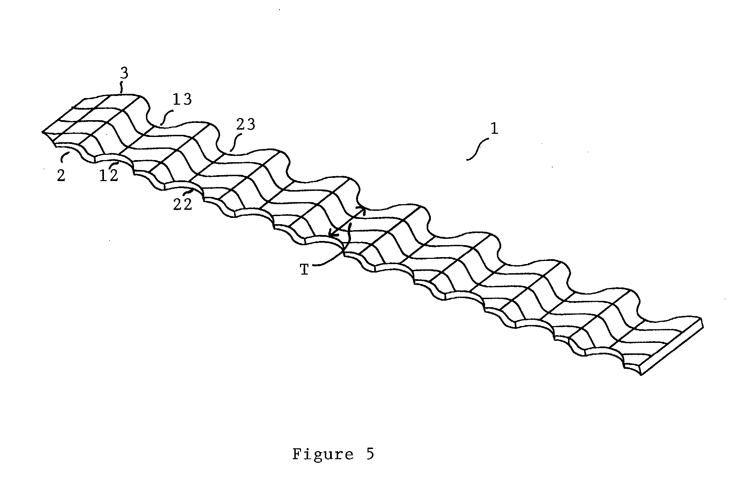

The present invention further relates to a method for producing the above described metal fibres 1. The metal fibres shown in figures 3-5 are obtained by passing a metal wire throughout a device for providing the plurality of consecutive recesses 12, 22; 13; 23 in opposite side faces of the metal wire in longitudinal direction thereof by locally compressing the metal wire at the position where the recess is to be formed. This local compression of the metal wire so as to create the recesses may be achieved by any suitable method known to the man skilled in the art. Suitable methods include impinging both opposite side faces of the metal wires or passing opposite side faces of the metal wire between a pair of opposite gear wheels, the teeth of which point towards each other. Alternatively, for producing metal fibres provided with recesses in only one side face, only one side face of the metal wire may be impinged or locally compressed by the gear wheels.

For producing the metal fibres shown in figures 1 and 4, subsequent to the step of providing the recesses 12, 22; 13, 23 in opposite side faces of the metal wire, an undulation step is performed. This may be done by any suitable method known to the man skilled in the art. A suitable method includes passing opposite side faces of the metal wire, adjacent the opposite side faces comprising the consecutive 12, 22; 13; 23 recesses, between a pair of gear wheels which are positioned in a staggered way and which rotate in opposite directions with respect to each other. One of the gear wheels is provided to form the bottoms of the undulations, whereas the other gear wheel is provided to form the tops of the undulations.

Subsequent to these steps of providing the recesses and eventually the undulations, the metal wire may be sized to metal fibres of a predetermined length achieved by any suitable method known to the man skilled in the art.

The invention is further elucidated by means of the following example and comparative example.

In comparative example 1, a steel fibre not according to the invention was tested for its tensile strength. In Example 1, a steel fibre according to the present invention was tested for its tensile strength. Both steel fibres are produced starting from steel wires with a semi-circular cross-section.

### Comparative Example 1

In Comparative Example 1, an undulated steel fibre not according to the invention having a length of 50 mm (length of the fibre when undulated) was subjected to a tensile strength measurement. The tensile strength measurement was performed in accordance with ASTM A370 standards or similar International Standards such as NEN-EN 10002-1 PART 1.

Prior to carrying out the tensile strength measurement, the following dimensions of the fibre were measured:

| | |
|---|---|
| Measured Width (mm) = | 2.25 mm |
| Measured Thickness (mm) = | 0.60 mm |
| Nominal Gauge length (Lₒ, mm) = | 100.00 mm |
| Actual Area (mm²)= | 1.350 mm² |
| * nominal gauge length = length of the fibre after having flattened the fibre | |

After being subjected to the tensile strength measurement, the final length (Lᵢ) of the fibre was 103.70 mm, and the measured elongation of the fibre was 3.70 % ((Lᵢ -Lₒ)/Lₒ x 100). The measured tensile strength of the fibre was 872.0 N/mm².

### Example 1

In Example 1, an undulated steel fibre according to the present invention having a length of 50 mm (length of the fibre when undulated) and having recesses provided in opposite side faces of the steel fibre adjacent the side face along which the undulations are provided, was subjected to a tensile strength measurement. The recesses are provided at regular distances from each other over the entire length of the fibre and the recesses on opposite side faces face each other and are provided at corresponding positions in longitudinal direction of the fibre. The corresponding recesses in the opposite side faces have a depth of approximately 20% of the width of the steel fibre. The tensile strength measurement was performed in accordance with ASTM A370 standards or similar International Standards such as NEN-EN 10002-1 PART 1.

Prior to carrying out the tensile strength measurement, the following dimensions of the fibre were measured:

| | |
|---|---|
| Measured Width (mm) = | 2.50 mm |
| Measured Thickness (mm) = | 0.80 mm |
| Nominal Gauge length (Lₒ, mm) = | 100.00 mm |
| Actual Area (mm²)= | 1.333 mm² |
| * nominal gauge length = length of the fibre after having flattened the fibre | |

After being subjected to the tensile strength measurement, the final length (Lᵢ) of the fibre was 103.30 mm, and the measured elongation of the fibre was 3.30 % ((Lᵢ -Lₒ)/Lₒ x 100). The measured tensile strength was 1074 N/mm².

## Claims

1. Metal fibre (1) having at least one side face (2, 3) extending in longitudinal direction of the metal fibre (1), **characterized in that** the at least one side face (2, 3) of the metal fibre (1) is provided with a plurality of consecutive recesses (12, 22; 13; 23), which are recessed with respect to the side face (2, 3) of the metal fibre (1).

2. Metal fibre (1) according to claim 1, **characterized in that** the recesses (12, 22; 13, 23) are provided at regular distances from each other over substantially the entire length of the metal fibre (1).

3. Metal fibre (1) according to claim 1 or 2, **characterized in that** the recesses (12, 22; 13, 23) are provided in opposite side faces (2, 3) of the metal fibre (1).

4. Metal fibre according to any one of claims 1-3, **characterized in that** pairs of opposite recesses (12, 13; 22, 23) present on opposite side faces (2, 3) are positioned on a line which extends substantially perpendicular with respect to the longitudinal direction of the metal fibre (1).

5. Metal fibre (1) according to any one of claims 1 - 4, **characterized in that** the metal fibre (1) has a width and **in that** the at least one recess (12, 22; 13, 23) is recessed with respect to the side face (2, 3) of the metal fibre (1) over a distance which is less than 50%, preferably less than 30% of the width of the metal fibre (1).

6. Metal fibre (1) according to any one of claims 1 - 5, **characterized in that** the metal fibre (1) is further provided with a plurality of undulations (6) extending in length direction of the metal fibre (1).

7. Metal fibre (1) according to claim 6, **characterised in that** the undulations (6) are provided along a side face (4, 5) of the fibre (1) adjacent the at least one side face (2, 3) comprising the recesses (12, 22; 13, 23).

8. Metal fibre (1) according to any one of claims 1-7, **characterized in that** the metal fibre (1) has a length of between 3 and 200 mm.

9. Fibre-reinforced concrete comprising an amount of the metal fibre (1) as claimed in any one of claims 1-8.

10. A method for producing metal fibres according to any one of claims 1 - 8, **characterized in that** the method comprises the step of passing a metal wire through a device which simultaneously compresses the metal wire on at least one side face of the metal wire so as to provide in longitudinal direction of the metal wire, a plurality of consecutive recesses (12, 22; 13, 23) in the at least one side face.

11. The method according to claim 10, **characterized in that** subsequent to the step of providing the recesses (12, 22; 13, 23), the method comprises a step of subjecting the metal wire to an undulating process, the undulations (6) extending in longitudinal direction of the metal wire.

12. The method according to claim 10 or 11, **characterized in that** the recesses (12, 22; 13, 23) are applied by passing the metal wire through a pair of opposite gear wheels provided to compress opposite side faces of the metal wire.

13. The method according to any one of claims 10 - 12, **characterized in that** the metal wire has a semi-circular cross section.
